# EUROPÄISCHE PATENTSCHRIFT

(11) **EP 2 500 629 B1**
(45) Veröffentlichungstag und Bekanntmachung des Hinweises auf die Patenterteilung: **06.09.2017**
(21) Anmeldenummer: 11158183.1
(22) Anmeldetag: 15.03.2011
(51) Int. Cl.: B60Q 1/26, F21S 8/10, F21V 5/00

(54) **Aussenspiegel eines Fahrzeugs mit Beleuchtungseinheit samt Mikrooptiken**
Rearview mirror for a vehicle with lighting units with micro-optics
Retroviseur de véhicule comprenant un dispositif d'éclairage avec des micro-optiques

(43) Veröffentlichungstag der Anmeldung: 19.09.2012
(73) Patentinhaber: SMR Patents S.à.r.l., 1653 Luxembourg (LU)
(72) Erfinder: Fritz, Daniel, 70374 Stuttgart (DE); Szmolenszki, Istvan, 71409, Schwaikheim (DE)
(74) Vertreter: Weber-Bruls, Dorothée

(56) Entgegenhaltungen:
- EP-A1- 0 584 547
- WO-A1-2006/107621
- DE-A1- 19 820 751
- DE-A1-102004 015 544
- DE-A1-102008 039 092
- GB-A- 2 163 542
- US-A1- 2010 027 085
- US-A1- 2010 253 500

## Beschreibung

Die Erfindung betrifft einen Außenspiegel eines Fahrzeugs mit einer Beleuchtungseinheit. Die Beleuchtungseinheit fügt sich harmonisch in die Kontur des Fahrzeugs ein.

### Stand der Technik

Aus dem Stand der Technik ist eine Vielzahl von Beleuchtungskörpern im Fahrzeug bekannt. Sowohl im Innenraumbereich als auch an der Außenkontur des Fahrzeugs werden unterschiedliche Beleuchtungseinheiten angebracht, die unterschiedlichen Funktionen erfüllen.

In Innenraumbereich handelt es sich um Beleuchtungen für Instrumente oder bestimmte Fahrzeugbereiche, um Ausleuchtungen zur Kennzeichnung von Bedienelementen oder für Beleuchtungen zum Lesen oder zur Ambientebeleuchtung. Um eine angenehme Umgebung zu schaffen, werden Bereiche wie der Fußraum, die Armablage an den Fahrzeugtüren, Bedienelement, Innenspiegel oder Dachmodule mindestens beim Ein- und Austeigen beleuchtet.

Im Außenbereich des Fahrzeugs dient eine Beleuchtung zur Kennzeichnung als Positionslicht, als Front-oder Heckbeleuchtung oder als blinkende Anzeige für Spurwechsel oder als Gefahranzeige für den Fahrer.

Sowohl innen als auch außen müssen die Beleuchtungen bestimmten Anforderungen genügen. Hier ist zunächst die Zulassungsfähigkeit zu beachten, die beispielsweise Leuchtdichte und Blinkwiederholraten von Blinkern festlegt. Auch die auszuleuchtende Raumbereiche in der Umgebung des Fahrzeugs sind durch Regulierungen bestimmt. Neben den Zulassungsauflagen bestimmt die Funktion und das Design das Aussehen der Beleuchtung.

Ein wichtiger Parameter im Stand der Technik ist dabei, dass die Beleuchtung verborgen angebracht wird.

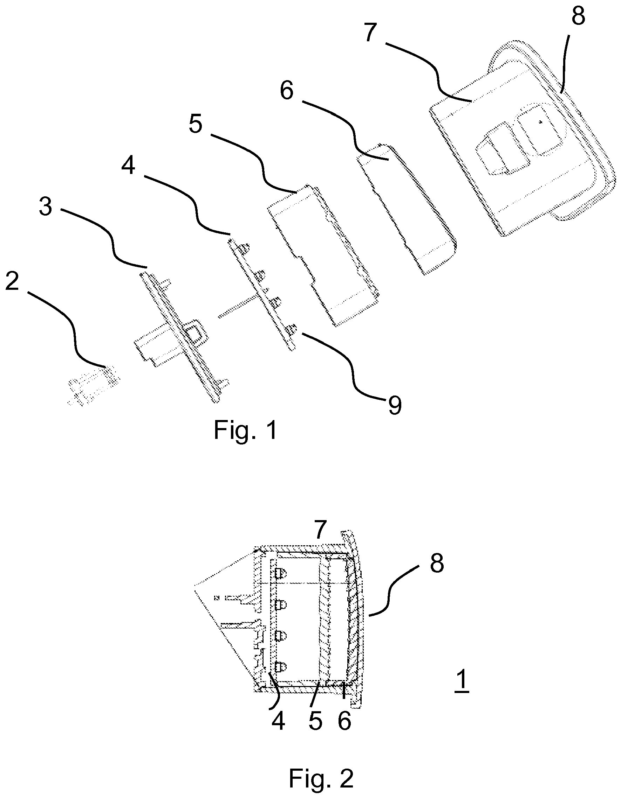

Das bedeutet, dass die Abdeckscheibe, die die Beleuchtungseinheit nach außen hin abschließt, im Farbton an die Umgebung angepasst wird oder dunkel eingefärbt ist, um nicht aufzufallen. Zudem soll die Abdeckscheib, eine freie Sicht auf die technischen Bauteile im Innern der Beleuchtungseinheit verhindern. Eine solche Ausführungsform findet sich in den Figuren 1 und 2. Dabei wird eine getönte Abdeckscheibe, oder eine Abdeckscheibe, die als Neutaldichtefilter ausgebildet ist, eingesetzt.

Je nach Einsatzort und Einsatzzweck soll das Licht einer oder mehreren Lichtquellen die Abdeckscheibe harmonisch ausleuchten und einen diffusen Lichteindruck hinterlassen. Alternative dazu wird auch eine definierte Ausleuchtung der Umgebung des Fahrzeuges oder ein auf ein Bauteil des Interieur gerichteter Lichtstrahl gewünscht.

Die DE 10 2004 015 544 A1 beschreibt eine leuchtende Anzeigeeinrichtung und eine Fahrzeugrückspiegelvorrichtung, bei der eine transparente Abdeckung aus Glas oder Harz zum Einsatz kommt.

Auch die US 2010/0253500 A1 beschreibt einen Autoaußenspiegel mit einer Abdeckung in Form einer Linse, die aus einem durchsichtigen Kunststoffmaterial gespritzt ist.

Im Stand der Technik wird in der US 7,293,901 B2 ein Beleuchtungselement beschrieben, das kollimierende optische Elemente sowie prismatische Strukturen zur Strahlablenkung aufweist Dieser kollimierende optische Block wird in die Leuchte eingebaut. Die vorgesehene Lichtquelle ist etwa 0,5 mm von der kollimierenden Einheit entfernt, daher lässt sich auch die Einkerbtiefe der Prismen auf etwa 0,15 mm bestimmen. Optische Elemente für den automotiven Einsatz werden vorzugsweises aus PMMA gespritzt. Dier Kunststoffspritzguss lässt dabei nur unter sehr aufwendigen Bedingungen das Spritzen von Strukturen unter 0,2 mm zu. Damit ist die Struktur im Stand der Technik gerade noch mit herkömmlichen Kunststoffspritzverfahren zu erzielen. Es handelt sich um Millimeter-Strukturen

Würde eine aus dem Stand der Technik bekannter optischer Block zudem als Graufilter eingefärbt, treten die Strukturen, durch die unterschiedlichen Dicken des gefärbten Material deutlich hervor. Eine solche Struktur im optischen Block wird vom menschlichen Auge aufgelöst. Durch die Einfärbung des Materials werden die Strukturen deutlicher sichtbar und wirken sich auf den Gesamteindruck der Beleuchtung negativ aus.

Die US 2010/027 085 A1 beschreibt eine Beleuchtungseinrichtung einer tragbaren Leuchte wie in Form einer Taschenlampe oder einer feststehenden Leuchte wie in Form einer Deckenlampe, umfassend eine Mehrzahl von auf einer ebenen Platine angeordneten Lichtquellen in Form von LEDs. Oberhalb der Lichtquellen ist parallel zu der Platine eine optisch durchlässige Abdeckscheibe angeordnet, auf der bereichsweise auf einer von den Lichtquellen abgewandten Seite holographische Strukturen angeordnet sind, welche hindurchtretendes Licht diffus ablenken. Die Abdeckscheibe kann relativ zu der Platine bewegt werden, um die holographischen Strukturen abwechselnd in den Abstrahlbereich der Lichtquellen zu bringen oder aus diesem zu entfernen, so dass eine Lichtabstrahlcharakteristik der Beleuchtungseinrichtung einstellbar ist.

Die WO 2006/107621 A1 beschreibt eine Beleuchtungseinrichtung zur Verwendung in einem Flüssigkristall-Display, beispielsweise für einen Fernseher. Die Beleuchtungseinrichtung umfasst Lichtquellen, die flächig zwischen einem Reflektor und einer Licht diffus ablenkenden Lichtscheibe angeordnet sind. In einem an die Lichtscheibe anschließenden Bereich ist ein eine Mikrostruktur aufweisender erster Film angeordnet, mittels dessen die durch den ersten Film hindurchtretenden Lichtstrahlen in eine bevorzugte Richtung, insbesondere in Richtung eines Betrachters des Fernsehers, gelenkt werden. In einem sich an den ersten Film anschließenden Bereich kann zudem ein zweiter Film angeordnet sein, der hindurchtretende Lichtstrahlen gegebenenfalls weiter ausrichtet. Die auf dem ersten Film angeordnete Mikrostruktur ist auf einer von den Lichtquellen abgewandten Seite des Films angeordnet. Die Mikrostruktur ist dabei so ausgebildet, dass dann, wenn der zweite Film unmittelbar auf dem ersten Film angeordnet ist, nur einige der Erhebungen der Mikrostruktur den zweiten Film berühren, während andere Erhebungen demgegenüber zu dem zweiten Film beabstandet bleiben.

Die EP 0 584 547 A1 betrifft einen Scheinwerfer für Kraftfahrzeuge mit einer Lichtquelle, wobei der Scheinwerfer in der Lage ist, einen Lichtfluss mit vorbestimmten Charakteristiken in einem Bereich außerhalb der Vorrichtung selbst bereitzustellen. Die Vorrichtung umfasst erste und zweite Beugungsmittel, um diese Charakteristiken zu erreichen.

DE 10 2008 039 092 A1 betrifft einen Scheinwerfer eines Fahrzeugs mit einer Beleuchtungsvorrichtung, umfassend eine vorgebbare Anzahl von Leuchtdioden als Lichtquellen, die in einem Abstand zueinander angeordnet und zu einem Leuchtdiodenfeld zusammengefasst sind, wobei ein erstes optisches Element angeordnet ist, welches ein in einem vorgebbaren Maßstab vergrößertes Bild des Leuchtdiodenfeldes erzeugt. Weiter ist ein zweites optisches Element vorgesehen, das derart gestaltet und angeordnet ist, dass vom Leuchtdiodenfeld abgehende Strahlen mittels des zweiten optischen Elements in im Bild optisch vergrößerten Abständen zwischen den Leuchtdioden ablenkbar sind.

In der GB 2 163 542 A ist eine Anzeigelampe für eine Nachtsichteinrichtung beschrieben, die ein Dünnfilm-Interferenz-Fenster nutzt.

Aus der DE 198 20 751 A1 ist eine Signalleuchte für Kraftfahrzeuge bekannt, die gleichzeitig die Funktion eines Fahrtrichtungsanzeigers als auch die Rückfahrleuchtenfunktion erfüllen kann, indem bestimmte elementare Lichtbündel eines Lichtbündels gefärbt werden.

Es ist daher Ziel der vorliegenden Anmeldung, einen Außenspiegel eines Fahrzeugs mit einer Beleuchtungseinheit zu liefern, die sich optimal an die Farbe der Umgebung anpasst und das Licht in gewünschter Form emittiert, wobei keine aufwendigen und kostenintensiven Vorkehrungen zu treffen sind.

### Beschreibung der Erfindung

Die Erfindung nutzt eine Beleuchtungseinheit mit mindestens einer Lichtquelle, die ihr Licht durch eine Abdeckscheibe abstrahlt, die harmonisch in die Kontur eines Fahrzeugs eingebracht ist, wobei die Abdeckscheibe nicht vollständig transparent ist. Zur Lösung der Aufgabe der Erfindung dienen Mikrostrukturen, die als Film auf die Abdeckscheibe aufgebracht werden.

Es zeigt
- Fig. 1 und Fig. 2: eine Gefahranzeige im Stand der Technik;
- Fig.3a und 3b: ein erstes Beispiel einer erfindungsgemäß genutzten Beleuchtungseinrichtung;
- Fig. 4, Fig. 4 und Fig. 5: weitere Ausführungsformen erfindungsgemäß genutzter Beleuchtungseinrichtungen;
- Fig. 6: eine sehr vereinfachte Ausführungsform einer erfindungsgemäß genutzten Beleuchtungseinrichtung , und
- Fig. 7: einen erfindungsgemäßen Außenspiegel.

Fig. 1 zeigt ein Beleuchtungsmodul 1 wie es für die Gefahranzeige eines Fahrerassistenten in einen bekannten Außenspiegel eingebaut wird. Ein solches Modul wird vorzugsweise in die Seitenwand eines Spiegelgehäuses verbaut, die vom Fahrer aus sichtbar ist. Das Beleuchtungsmodul leuchtet beispielsweise auf ein Steuersignal eines Fahrerassistenzsystems auf, wenn sich ein Fahrzeug im Totwinkelbereich nähert. Das Beleuchtungsmodul selbst besteht aus einer Gehäuserückwand 3, die zusammen mit einem Gehäuse 7 ein geschlossenes Modul bildet. Das Modul muss dabei nicht unbedingt wasserdicht verschlossen sein; es kann von Vorteil sein, das Modul nicht zu dichten und Luftkonvektion nach außen zuzulassen. Innerhalb des Gehäuses 7 ist eine Leiterplatte 4 mit Leuchtmitteln 9 auf der Gehäuserückwand 3 installiert. Eine optisches Element 5 sowie eine Streuscheibe 6 sind innerhalb des Gehäuses eingebracht, um das Licht der Lichtquellen 9 zu verteilen.

Der elektrische Anschluss wird über einen Stecker 2, der in ein Steckergegenstück der Gehäuserückwand passt, hergestellt. Das Gehäuse 7 ist von einer Abdeckscheibe 8 nach außen verschlossen. Die Abdeckscheibe 8 passt sich in ihrer Form an die Kontur des Bauteils an, in das die Leuchte eingebracht ist.

Die Abdeckscheibe ist als Neutraldichtefilter, also als Graufilter ausgeführt, um den Blick in das Beleuchtungsmodul 1 zu verhindern und um sich besser an die Farbe umgebenden Bauteile anzupassen.

Als Material für die Abdeckscheibe kommt PMMA oder ein anderer optisch klarer Kunststoff zum Einsatz, der ohne Verlust der optischen Eigenschaften eingefärbt werden kann. Wie in Figur 2 zu erkennen ist, sind jeweils eine Oberfläche des optischen Elements 5 sowie der Streuscheibe 6 struktureiert. Der Aufwand ist notwendig, um das Licht der Lichtquellen 9 wenigstens etwas zu verteilen und so ein gleichmäßiges Ausleuchten der Abdeckscheibe 8 zu erreichen. Der Gesamteindruck bleibt aber bei dieser Lösung von der erwarteten harmonischen Ausleuchtung entfernt.

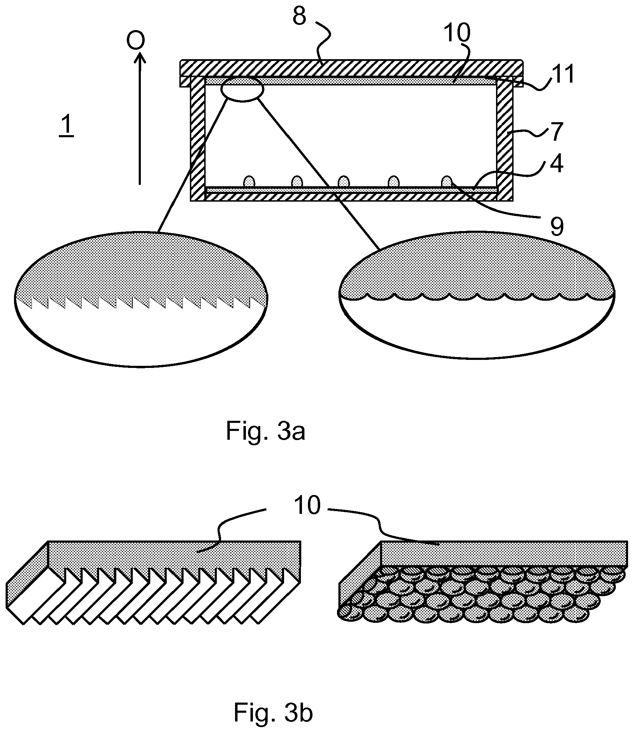

Figur 3 zeigt eine Beleuchtungseinheit 1, die ein geschlossenes Gehäuse 7 mit einer Gehäuserückwand 3 aufweist und für einen erfindungsgemäßen Außenspiegel eingerichtet ist.

Mehrere Leuchtmittel 9 sind auf einer Leiterplatte 4 installiert, wobei sich die Leiterplatte parallel zur Gehäuserückwand erstreckt. Die Hauptabstrahlrichtung der Leuchtmittel liegt in der Richtung der optischen Achse O. Die Abdeckscheibe 8 verschließt das Gehäuse nach außen hin. Das Gehäuse wird in zwei Teilen hergestellt. Entweder wird die Abdeckscheibe mit den Seitenwänden 7' des Gehäuses 7 zusammen hergestellt und die Rückwand 3 danach verbunden, oder die Gehäuserückwand 3 wird mit den Seitenwänden7' gespritzt und danach mit der Abdeckscheibe verbunden. Die Abdeckscheibe kann dabei auch Teil eines Bauteils des Fahrzeugs sein, so dass sie direkt in einem 2k Spritzverfahren hergestellt wird.

Das Licht der Leuchtmittel wird durch die Abdeckscheibe 8 in einem Raumbereich mit einem Ablenkwinkel α zur optischen Achse O ausgestrahlt. Auf der Innenseite der Abdeckscheibe ist ein optischer Film 10 aufgebracht, der in der Vergrößerung dargestellt ist. Der optische Film 10 weist entweder prismatische Mikrostrukturen auf oder zeigt eine Mikrolinsen-Struktur. In Figur 2b werden die beiden Beispiele nochmals dargestellt.

Prismatische optische Filme sind beispielsweise aus der US 7,763,331 bekannt. Sie dienen in der Displaytechnologie zur harmonischen Verteilung des Lichtes der Hintergrundbeleuchtung. Der beispielhaft genannte prismatische Film besteht ausKunststoffmaterial, wobei das Trägermaterial mit dem aufgebrachten Material für die Struktur identisch oder unterschiedlich sein kann.

Die Dicke des Filmes bewegt sich dabei zwischen 0, 025 mm und 0,125 mm mit einer geringen strukturierten Höhe von 2 bis 25 µm. Der Film ist kommerziell erhältlich und wird außerhalb des automotiven Anwendungsbereichs bereits eingesetzt. Durch die geringe Dicke h des Films 10 stört er die optischen Eigenschaften der Abdeckscheibe nur sehr wenig. Die Struktur des Films ist vom Auge nicht mehr auflösbar und verursacht auch keine Dickenunterschiede der Abdeckscheibe selbst.

Der Film 10 ist auf einfache Weise auf die Innenseite 11 der Abdeckscheibe aufzubringen. Er kann geklebt oder punktuell geschweißt werden. Bei flächenmäßig kleinen Abdeckscheiben ist ein adhäsives Verbinden möglich und ausreichend. Der Film wird an seinen Außenkanten von den Seitenwänden 7' des Gehäuses festgehalten. Es ist auch einen Ausführungsform mit einem prismatischen Film denkbare, dessen Außenkanten stumpf am Gehäuse enden. Primatische Folien werden mit unterschiedlichen Prismenformen und Prismenwinkel zwischen 70 bis 120° hergestellt.

Die Mikrolinsen im zweiten Beispiel werden in der Größenordnung von Nanometern bis 5 µm auf einem Trägermaterial hergestellt. Die Anwendung von Mikrolinsen findet aktuell nur außerhalb der automotive Fertigung statt. Die Mikrolinsen ermöglichen eine sehr harmonische Ausleuchtung des von ihnen bedeckten Teils der Abdeckscheibe und werden wie die prismatischen Filme auf der Innenseite der Abdeckscheibe aufgebracht.

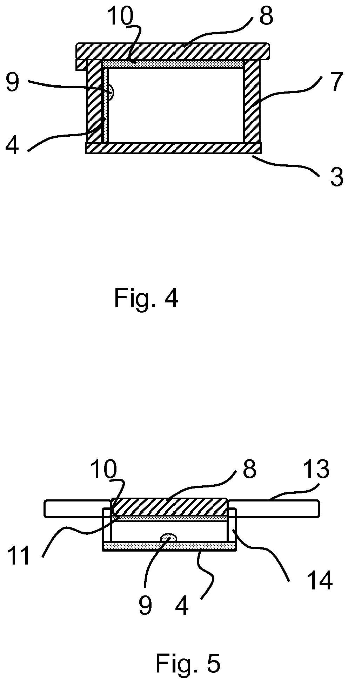

Figur 4 zeigt eine weitere Ausführungsform der Beleuchtungseinheit 1. Es liegt wiederum ein geschlossenes Gehäuse 7 vor, das mit einer Gehäuserückwand 3 verbunden ist. Im Innern des Gehäuses wird einen Leiterplatte 4 installiert. Diese Leiterplatte befindet sich parallel zu der eingezeichneten optischen Achse an einer Seitenwand 7'. Die Leiterplatte 4 trägt eine einzelne LED als Leuchtmittel 9, die in den Bauraum des Beleuchtungsmittels abstrahlt. Die Abdeckscheibe 8 weist auf ihrer inneren Fläche 11 wieder einen optischen mikrostrukturierten Film 10 auf. Dadurch wird das Licht der LED, die in den Bauraum abstrahlt, verteilt. Um die Verteilung zu verbessern, kann der Bauraum zusätzlich mit reflektierenden Schichten bedeckt sein.

Die Kontaktierung der Ausführungsformen nach Fig. 3 und 4 erfolgt über Steckverbindungen, die nicht dargestellt sind.

Figur 5 zeigt eine weitere Ausführungsform der Beleuchtungseinheit, die auf die wesentlichen Bauteil beschränkt ist.

Die Abdeckscheibe 8 ist harmonisch in den Verlauf der Fahrzeugkontur 13 eingepasst. Auf ihrer Innenseite 11 der Abdeckscheibe 8 ist ein mikrostrukturierter Film 10 angebracht. Eine Leiterplatte 4 mit einer darauf montierten LED 9 ist über Stege 14 direkt mit der Abdeckplatte oder mit den Bauteilen 13 des Fahrzeugs verbunden. Es ist kein Gehäuse vorgesehen. Die Stege können auch als Klipsverbindungen ausgelegt sein und eine einfache unkritische Montage ermöglichen. Da die mikrostrukturierten Filme das Licht zuverlässig streuen, sind der Einbauwinkel und der Einbauort der LED 9 nicht kritisch und die Lichtverteilung ist trotzdem optimal gewährleistet.

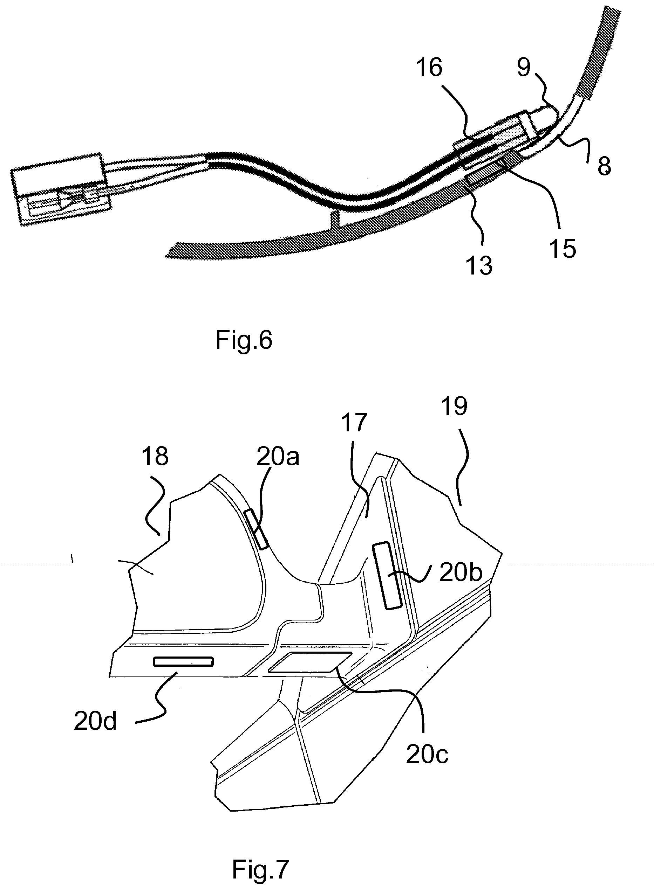

Fig. 6 zeigt ein weiteres Ausführungsbeispiel, bei dem die Lichtquelle als drahtgebundene LED 9 ausgestaltet ist. Die Verdrahtung ist dabei mit einem Verbindungskörper 16 umspritzt. Das Bauteil der Fahrzeugkontur 13 weist ein Befestigungsgegenstück aus, das als Klipsverbindung 15 ausgebildet sein kann. Die LED wird mit ihrem Verbindungskörper an das Bauteil 13 geklipst, die LED selbst ragt in Richtung der Abdeckscheibe 8, die innen den mikrostrukturierten Film 10 trägt.

In allen Ausführungsformen ist die Abdeckscheibe wenigstens teilweise als Neutraldichte-oder Farbfilter mit einer Durchlässigkeit von weniger als 95 % ausgebildet.

Fig. 7 zeigt eine Außenspiegelanordnung mit einem Spiegelfuß 17 und einem Spiegelkopf 18. Der Spiegelkopf 18 ist im Allgemeinen gegen den Spiegelfuß 17 drehbar angeordnet. Der Spiegelfuß wird am Fahrzeug 19 befestigt. In der Figur 7 werden mehrere mögliche Einbauorte für Beleuchtungseinheiten skizziert. Die Positionen sind mit der Referenz 20 gekennzeichnet.

Die Beleuchtungseinheiten leuchten je nach Funktion als harmonisch beleuchtete Lichtbereiche auf. Eine Warnanzeige eines Fahrerassistenzsystems ist an der Position 20a oder an einer anderen dem Fahrer zugänglichen Position des Außenspiegels angebracht. Die Anzeige leuchtet bei Gefahr auf. Die Abdeckscheibe der Warnanzeige wird dabei vollständig und harmonisch beleuchtet.

Soll das Licht der Beleuchtungseinheit gerichtet ausgestrahlt werden, müssen mikrostrukturierte Filme eingesetzt werden, die zu einer Ablenkung der ausgesendeten Lichtstrahlen führen. Durch spezielle Anordnung der prismatischen Strukturen kann beispielsweise ein Film erzeugt werden, der das einfallende Licht gerichtet in einem bestimmten Winkel β zur optischen Achse abstrahlt.

Kommerziell erhältlich ist beispielsweise ein Film, mit dem Licht in einem Winkel von 20° von der optischen Achse weggelenkt wird.

An der Einbauposition 20b der Beleuchtungseinheit ist die Ausleuchtung eines Bereichs neben dem Fahrzeug und die Funktion als Umfeldleuchte möglich. Das Licht der Umfeldleuchte wird schräg nach unten emittierte. Auch eine Beleuchtung der Tür und des Einstiegbereichs ist denkbar.

## Patentansprüche

1. Außenspiegel (17, 18) eines Fahrzeugs (19) mit einer Beleuchtungseinheit (1) mit mindestens einer Lichtquelle (9), die ihr Licht durch eine Abdeckscheibe (8) abstrahlt, die harmonisch in die Kontur des Fahrzeugs eingebracht ist, wobei die Abdeckscheibe (8) nicht vollständig transparent ist und einen Film (10) mit Mikrostruktur auf der der Lichtquelle (9) zugewandten Oberfläche (11) für die Streuung des Lichtes aus der mindestens einen Lichtquelle (9) aufweist, so dass die Abdeckscheibe (8) gleichmäßig ausgeleuchtet wird.

2. Außenspiegel nach Anspruch 1, **dadurch gekennzeichnet, dass** die Mikrostruktur optische Elemente von einer Höhe unter 100 µm aufweist.

3. Außenspiegel nach Anspruch 1, **dadurch gekennzeichnet, dass** die Abdeckscheibe ein Neutraldichtefilter ist.

4. Außenspiegel Beleuchtungseinheit (1) nach Anspruch 1, **dadurch gekennzeichnet, dass** die Abdeckscheibe an die Farbe der sie umschließenden Bauteile des Fahrzeugs angepasst ist.

5. Außenspiegel nach Anspruch 1, **dadurch gekennzeichnet, dass** die Abdeckscheibe Teil eines Moduls oder Teil der Fahrzeugkontur ist.

6. Außenspiegel nach Anspruch 1, **dadurch gekennzeichnet, dass** der Film (10) ein optischer Film ist, der eine prismatische oder linsenartige Mikrostruktur aufweist.

7. Außenspiegel nach Anspruch 1, **dadurch gekennzeichnet, dass** die Beleuchtungseinheit als Warnanzeige im Außenspiegel verbaut ist.

8. Außenspiegel nach Anspruch 7, **dadurch gekennzeichnet, dass** die Warnanzeige an der inneren dem Fahrer zugewandten Wandung des Außenspiegelgehäuses angebracht ist.

9. Außenspiegel nach Anspruch 1, **dadurch gekennzeichnet, dass** die Beleuchtungseinheit als Umfeldleuchte an der Außenspiegelanordnung am Fahrzeug verbaut ist.

## Claims

1. Exterior mirror (17, 18) of a vehicle (19) having an illumination unit (1) having at least one light source (9) which transmits its light through a covering plate (8) which is inserted into the contour of the vehicle in a harmonious manner, wherein the covering plate (8) is not completely transparent and has a film (10) with a microstructure on the surface (11) facing the light source (9) for scattering the light from the at least one light source (9) so that the covering plate (8) is illuminated in a uniform manner.

2. Exterior mirror according to claim 1, **characterised in that** the microstructure has optical elements having a height of less than 100 µm.

3. Exterior mirror according to claim 1, **characterised in that** the covering plate is a neutral density filter.

4. Exterior mirror illumination unit (1) according to claim 1, **characterised in that** the covering plate is adapted to the colour of the components of the vehicle which surround it.

5. Exterior mirror according to claim 1, **characterised in that** the covering plate is part of a module or part of the vehicle contour.

6. Exterior mirror according to claim 1, **characterised in that** the film (10) is an optical film which has a prismatic or lens-like microstructure.

7. Exterior mirror according to claim 1, **characterised in that** the illumination unit is constructed as a warning indicator in the exterior mirror.

8. Exterior mirror according to claim 7, **characterised in that** the warning indicator is attached to the inner wall of the exterior mirror housing facing the driver.

9. Exterior mirror according to claim 1, **characterised in that** the illumination unit is constructed as an ambient light on the exterior mirror arrangement on the vehicle.

## Revendications

1. Rétroviseur extérieur (17, 18) d'un véhicule (19) avec une unité d'éclairage (1) comprenant au moins une source de lumière (9) qui émet sa lumière à travers un cabochon (8), qui est disposé de manière harmonieuse dans le contour du véhicule, dans lequel le cabochon (8) n'est pas complètement transparent et présente un film (10) avec une microstructure sur la surface (11) tournée vers la source de lumière (9) pour disperser la lumière provenant de la au moins une source de lumière (9) de sorte que le cabochon (8) soit éclairé de manière uniforme.

2. Rétroviseur extérieur selon la revendication 1, **caractérisé en ce que** la microstructure présente des éléments optiques d'une hauteur en dessous de 100 µm.

3. Rétroviseur extérieur selon la revendication 1, **caractérisé en ce que** le cabochon est un filtre de densité neutre.

4. Unité d'éclairage de rétroviseur extérieur (1) selon la revendication 1, **caractérisée en ce que** le cabochon est adapté à la couleur des composants du véhicule qui l'entourent.

5. Rétroviseur extérieur selon la revendication 1, **caractérisé en ce que** le cabochon fait partie d'un module ou d'une partie du contour du véhicule.

6. Rétroviseur extérieur selon la revendication 1, **caractérisé en ce que** le film (10) est un film optique qui présente une microstructure prismatique ou en forme de lentille.

7. Rétroviseur extérieur selon la revendication 1, **caractérisé en ce que** l'unité d'éclairage est conçue sous la forme d'un indicateur d'avertissement dans le rétroviseur extérieur.

8. Rétroviseur extérieur selon la revendication 7, **caractérisé en ce que** l'indicateur d'avertissement est monté sur la paroi interne du boîtier de rétroviseur extérieur tournée vers le chauffeur.

9. Rétroviseur extérieur selon la revendication 1, **caractérisé en ce que** l'unité d'éclairage est conçue sous la forme d'une lampe périphérique sur l'agencement du rétroviseur extérieur sur le véhicule.
